Europäisches Patentamt

European Patent Office

Office européen des brevets

(11) Publication number: **0 125 638**
**A2**

# (12) EUROPEAN PATENT APPLICATION

(21) Application number: **84105293.9**

(22) Date of filing: **10.05.84**

(51) Int. Cl.³: **C 04 B 35/00**

(30) Priority: **13.05.83 JP 84794/83**

(43) Date of publication of application:
**21.11.84 Bulletin 84/47**

(84) Designated Contracting States:
**BE CH DE FR GB IT LI NL SE**

(71) Applicant: **KANEGAFUCHI KAGAKU KOGYO KABUSHIKI KAISHA**
**2-4 Nakanoshima 3-chome**
**Kita-ku Osaka-shi(JP)**

(72) Inventor: **Nanao, Tsutomu Nanseidai Mansion Shinkan 202**
**124-43, Nakayamatedori 7-chome**
**Chuo-ku Kobe-shi Hyogo-ken(JP)**

(72) Inventor: **Eguchi, Tamiyuki**
**2-31, Yoshida-cho 1-chome**
**Hyogo-ku Kobe-shi Hyogo-ken(JP)**

(74) Representative: **Türk, Dietmar, Dr. rer. nat. et al,**
**Redies, Redies, Türk & Gille Patentanwälte**
**Brucknerstrasse 20**
**D-4000 Düsseldorf 13(DE)**

(54) Precursor film for ceramic film and its use and process for preparing the same.

(57) A precursor film for a ceramic film of not more than 1 mm in thickness containing (a) a polymer material and (b) an organometal compound, a hydrolyzed product thereof or a mixture thereof at a metal content of not less than 5% by weight, which can provide an useful functional ceramic film. The precursor film can be prepared by dissolving or dispersing the components (a) and (b) into a solvent, applying the solution to a substrate and removing the solvent.

EP 0 125 638 A2

## PRECURSOR FILM FOR CERAMIC FILM AND ITS USE AND PROCESS FOR PREPARING THE SAME

The present invention relates to a novel precursor film for a ceramic film and a process for preparing the same.

At present, doctorblade process is well known as a process for preparing a ceramic sheet. In the process, a substrate such as a film is coated with a past in which a ceramic powder is dispersed in a polymer binder, and then dried to give a green sheet. A ceramic sheet is prepared by baking the green sheet.

The conventional method is the most suitable for preparing a baked ceramic material usually having a thickness of about 0.5 mm and is widely emloyed to prepare materials for electronic parts.

However, according to the conventional process it is difficult to prepare a further thinner ceramic film. That is, there are defects that sufficient sintered density and uniformity of the baked ceramic film cannot be achieved because the conventional ceramic paticles have several micronmeters in particle size, which makes the packing density and the surface area smaller in the form of film. The defects result from the large particle size of the ceramic particles employed. Therefore, there are many attempts to make ceramic particles finer and the distribution of the particles narrower, and some of the trials are brought into practice. However, there arised a defect that dispersion property of ceramic particles is reduced because cohesive force of the particles is bigger as the particles become finner.

. The present invention has been completed from the surprising fact that a ceramic thin film of not more than 100 μm in thickness can be prepared by baking a precursor film for a ceramic film having a thickness of not more than 1 mm which is made of a polymer material containing an organometal compound and/or its hydrolyzed product at a metal content of not less than 5 % (% by weight, hereinafter the same).

The present invention relates to a process for preparing a precursor film for a ceramic film, which comprises dissolving or dispersing (a) a polymer material and (b) an organometal compound and/or its hydrolyzed product in a co-solvent, applying the solution to a substrate and removing the co-solvent.

According to the process of the present invention there can be provided a precursor film for a ceramic film having a thickness of not more than 1 mm which is made of the components (a) and (b) at a metal content of not less than 5 %. Furthermore, the ceramic thin film can be prepared at a considerably lower baking temperature than that in the conventional process, and also a transparent ceramic film can be prepared by selecting the components used.

The preferable organometal compound (b) is an organometal compound which can be rapidly thermally decomposed to give an inorganic compound at the baking and does not contains carbon and/or a halide which prevent the decomposition reaction and deteriorate the characteristics of the product. Examples of the organometal compound are, for instance, a metal alkoxide, a metal salt of carboxylic acid, a metal chelate, preferably a β-diketone metal complex, a reaction product thereof and a mixture thereof. Furthermore, a condensed oligomer and a hydrolyzed product of the organometal compound such as a metal component in the form of gel and colloid obtained by hydrolysis may be employed.

The organometal compound used in the present invention can provide ultrafine ceramic particles (particles of not more than 1 μm in particle size which cannot be prepared by any mechanical grinding) having a narrow range in distribution of particle size.

Examples of the metal alkoxide are, for instance, a reaction product of a metal such as boron, alminum, gallium, yttrium, indium, silicon, titanium, germanium, zirconium, tin, vanadium, niobium, antimony, tantalum, bismuth, chromium, molybdenum, tungsten, manganese or iron with an alcohol having 1 to 8 carbon atoms; a compound metal alkoxide thereof; a condensed oligomer thereof and a hydrolyzed product thereof.

Examples of the metal salt of carboxylic acid are, for instance, a salt of a metal such as lead, cobalt, lanthanum, cadomium, calcium, magnesium, barium, strontium, cerium, nickel, copper, zirconium, manganese, potassium, sodium, tin, boron, zinc, iron or indium with a carboxylic acid such as acetic acid oxalic acid, butylic acid, lactic acid, naphthenic acid, octylic acid, oleic acid; and a hydrolyzed product thereof.

Examples of the metal chelate are, for instance, an acetylacetonate complex of a metal such as alminum, barium, beryllium, calcium, cadomium, cerium, cobalt, chromium, copper, iron, gallium, indium, lanthanum, lithium, magnesium, manganese, molybdenum, titanium, vandaium, yttrium, zinc or zirconium.

A reaction product of the organometal compounds may also be employed, and a reaction product of the metal alkoxide with the metal chelate and a reaction product of the metal alkoxide with the metal salt of carboxylic acid are especially preferable by virture of their excellent stability and solubility.

It is important to uniformly dissolve or disperse the organometal compound and its hydrolyzed product into the polymer solution. Thus, depending on the desired composition of the ceramic the amount and the combination of the organometal compounds may be selected from viewpoints of solubility and stability of the organometal compounds.

As the polymer material (a) used in the present invention, any polymer material capable of being dissolved in the solvent in which the component (b) can be dissolved are employed. It is preferable that the polymer has high melting and softening temperatures and does not produce a carbide which deteriorates the characteristics of the product and a corrosive gas during the heat treatment.

Examples of the polymer materials are, for instance, polyacrylamide, polyacrylic acid, polyacrylate, polyamide, polyisobutylene, polyisoprene, polyimide, polyethylene, polyether, polyvinyl acetate, polyvinyl alcohol, polyvinylpyrrolidone, polybutadiene, polybutyral, polyurethane, polyethylene glycol, a mixture thereof, and the like.

In the present invention, any additive such as a plasticizer for making a film flexible, a release agent for readily leasing the film from a substrate, a lubricant, a dispersing agent, and the like may be added.

It is important to add the polymer material so that the effective metal content in the film formed becomes not less than 5 %. When the amount of the effective metal content is less than 5 %, it is difficult to maintain the shape of the ceramic film obtained by baking and the sintered density of the ceramic film remarkably lowered.

In the presenet invention, it is necessary to dissolve the components (a) and (b) in a co-olvent. Examples of the co-solvent are, for instance, water; an organic solvent having 1 to 20 carbon atoms such as a monohydric- or a polyhydric-alcohol; a carboxylic acid ester; a ketone; an aromatic hydrocarbon; an ether; a nitrogen-containing organic solvent such as diemthylformamide, dimethylactamide or N-methyl-2-pyrrolidone; and a mixture thereof.

The co-solvent to be practically used should be selected depending on the combination of the organometal compound (b) and the polymer material (a). The order of addition of the components is not particularly limited.

The precursor film for the ceramic film may be prepared by applying the uniform solution containing the components (a) and (b) to a metal foil or a plastic film and evaporating the solvent with heating. The preparation conditions can be selected depending on a combination of the components in the solution. In addition, a complicated mold article may also be prepared by casting into a mold, followed by drying.

However, since abrupt heating causes the film to be foamed and deformation of the film to increase, the abrupt heating should be avoided. Also, it is important to carry out the coating so that the thickness of the film formed by removing the solvent is not more than 1 mm. A film having thickness of more than 1 mm is not preferred because such thick film is sometimes contaminated with carbon residues or cracks caused by gases resulting from decomposition of the compounds.

The precursor film for the ceramic film obtained in the present invention can provide a film of calcined ceramics of the desired composition by baking. In addition, a laminated film of ceramics of the same or different components can also be prepared.

The precursor film for the ceramic film and the process for preparing the same of the present invention provides new functional ceramic materials such as various kinds of sensor, electrical conductive materials, materials for optical devices, magnetic recording materials, piezoelectirc materials, dielectric materials, and the like.

The present invention is more particularly described and explained by means of the following Examples. It is to be understood that the present invention is not limited to the Examples and various changes and modifications may be made in the invention without departing from the spirit and scope thereof.

## Example 1

After 15 g of iron triethoxide was dissolved in 50 g of dry ethyl alcohol, 30 g of a mixture of water and ethanol (1:1 by volume) was added to give a solution of a hydrolyzed product of the organometal compound. To the solution 20 g of a solution of ethanol and water (1:1 by volume) containing 3 % polyvinyl alcohol having an average polymerization degree of about 2,000 was added, and the mixture was stirred to give a uniform solution. The solution was poured onto a polyester film of 50 μm in thickness. After the film was dried for 2 days at room temperature, a precursor film for a ceramic film of about 80 μm in thickness was obtained by separating from the polyester film.

The film was heated by elevating a temperature at a rate of $1^{\circ}C$/min to $600^{\circ}C$ and maintaining for one hour at $600^{\circ}C$. After gradually cooling, a ceramic film of α-iron oxide having a thickness of about 20 μm was obtained.

## Example 2

After 16.79 g of barium acetylacetonate and 14.21 g of titanium tetraisopropoxide were added to 100 g of dry ethyl alcohol so as to give an atomic ratio of Ba:Ti=1:1, 1 g of paraformaldehyde was further added and was refluxed to give a reddish brown uniform solution. After the solvent was changed from ethanol into tetrahydrofuran of the same amount, 30 g of tetrahydrofuran solution containing 5 % polyvinyl acetate was added thereto. After stirring, the solution was poured onto a polytetrafluoroethylene sheet. A precursor film for a ceramic film of about 100 μm in thickness was obtained by drying the sheet at room temperature.

The film was heated by elevating a temperature at a rate of $5^{\circ}C$/min to $1000^{\circ}C$ and maintaining for one hour at $1000^{\circ}C$. After gradually cooling, a cream colored film of barium titanate having a thickness of about 30 μm was obtained.

## Example 3

After 23.3 g of iron triisopropoxide and 7.58 g of barium octylate containing 15.1 % barium were dissolved in 100 g of dry isopropyl alcohol so as to give an atomic ratio of Fe:Ba=12:1, and were refluxed for 30 mim with heating. To the resulting solution 50 g of isopropyl alcohol containing 5 % of polyvinylpyrrolidone was added. After stirring, the solution was poured onto a polytetrafluoroethylene sheet and was dried on a hot plate at 50°C to give a precursor film for a ceramic film of about 60 μm in thickness.

The film was heated by elevating a temperature at a rate of 20°C/min to 1000°C and baked for one hour at 1000°C to obtain hexagonal barium ferrite in the form of film.

## Example 4

After 17.5 g of iron triacetylacetonate and 6.90 g of nickel diacetylacetonate were added to 50 g of 40 % formarin, the mixture was stirred to give a uniform solution. To the solution an aqueous solution containing 20 % polyvinyl alcohol (average polymerization degree of about 2,000) was added and 5 g of aqueous ammonia was further added. A viscous and uniform solution was obtained. The solution was poured onto a polyester film and dried for 3 days at room temperature. After drying and separating from the sheet, a precursor film for a ceramic film of about 100 μm in thickness was obtaind.

The film obtained was heated by elevating a temperature at a rate of 5°C/min to 800°C and baked for one hour at 800°C. After gradually cooling, a film of nickel spinel ferrite of about 30 μm in thickness was obtained.

WHAT WE CLAIM IS:

1. A precursor film for a ceramic film of not more than 1 mm in thickness containing (a) a polymer material and (b) an organometal compound, a hydrolyzed product thereof or a mixture thereof at a metal content of not less than 5 % by weight.

2. The precursor film of Claim 1, wherein the component (b) is a metal alkoxide, a metal salt of a carboxylic acid, a metal chelate or a reaction product thereof.

3. A process for preparing a precursor film for a ceramic film of not more than 1 mm in thickness containing (a) a polymer material and (b) an organometal compound, a hydrolyzed product thereof or a mixture thereof at a metal content of not less than 5 % by weight, which comprises dissolving or dispersing the components (a) and (b) into a solvent, applying the solution to a substrate, and removing the solvent.

4. Use of the precursor film of claim 1 for preparing a ceramic film of not more than 1mm in thickness.